# EUROPÄISCHE PATENTSCHRIFT

(11) **EP 1 099 584 B1**
(45) Veröffentlichungstag und Bekanntmachung des Hinweises auf die Patenterteilung: **02.11.2005**
(21) Anmeldenummer: 00120059.1
(22) Anmeldetag: 15.09.2000
(51) Int. Cl.: B60J 7/08, B62D 21/09, B62D 25/06

(54) **Fahrzeug mit am Seitenschweller längsverlaufendem Schutzträger**
Vehicle with longitudinal stiffening beam along side sill
Véhicule avec poutre de renfort le long d'un longeron

(30) Priorität: 11.11.1999 DE 19954292
(43) Veröffentlichungstag der Anmeldung: 16.05.2001
(73) Patentinhaber: Dr.Ing. h.c.F. Porsche Aktiengesellschaft, 70435 Stuttgart (DE)
(72) Erfinder: Dukat, Michael, 75239 Eisingen (DE); Walter, Siegfried, 71229 Leonberg (DE); Jahn, Rüdiger, 71229 Leonberg (DE)

(56) Entgegenhaltungen:
- DE-A- 19 528 874
- PATENT ABSTRACTS OF JAPAN vol. 013, no. 193 (M-822), 9. Mai 1989 (1989-05-09) & JP 01 018784 A (MAZDA MOTOR CORP), 23. Januar 1989 (1989-01-23)

## Beschreibung

Die Erfindung bezieht sich auf ein Fahrzeug mit einer im Längsschwellerbereich des Fahrzeugaufbaus angeordneten seitlichen Verstärkung.

Aus der DE 196 03 098 A1 ist eine Fahrgastzelle für einen Personenwagen mit einem in einer B-Säule integrierten Verstärkungsrohr bekannt, das sich in Fahrzeugquerrichtung erstreckt und einen Fortsatz begrenzter Länge im Längsschweller aufweist. Aus der gattungsgemäßen JP 01 01 8784 A ist ein im Schweller eines Kraftfahrzeugs über Knotenbleche gehaltenes Verstärkungselement bekannt, das von Flanschen des Knotenbleches fest umschlossen ist. Des Weiteren ist aus der DE 195 28 874 ein Verstärkungselement in einer Außenschale eines Schwellers bekannt, dem in einer Innenschale des Schwellers Distanzprofilteile gegenüberstehen.

Aufgabe der Erfindung ist es, ein Fahrzeug mit einer im Längsschwellerbereich des Fahrzeugaufbaus angeordneten Verstärkung zu schaffen, die hinsichtlich eines Seitenaufpralls stabil ausgeführt ist.

Dieser Aufgabe wird erfindungsgemäß durch die kennzeichnenden Merkmale des Anspruchs 1 gelöst. Weitere vorteilhafte Merkmale sind in den Unteransprüchen gekennzeichnet.

Die mit der Erfindung hauptsächlich erzielten Vorteile bestehen darin, daß durch eine längsverlaufende seitliche Verstärkung, wie beispielsweise durch einen Stützträger in Form eines Rohres der im Längsschweller jeder Seite eines Fahrzeugaufbaus angeordnet ist, insbesondere bei einem Seitenaufprall eine weitgehend sichere Fahrzeugzelle gewährleistet ist.

Erreicht wird dies, indem der Stützträger im Längsschweller sich etwa über den gesamten Längenbereich zwischen Radkästen des Fahrzeugs erstreckt, und über Halteelemente an Aufbausäulen eines innenliegenden Seitenteils des Fahrzeugs befestigbar ist, und zwischen einem Schwellerinnenteil und unteren Enden der Aufbausäulen der Seiteninnenwand jeweils ein Stützbock angeordnet ist, der dem Stützträger in einer horizontalen Ebene unmittelbar gegenübersteht. Der Stützträger ist vorzugsweise in dem verbleibendem Schwellerraum zwischen Schwelleraußenteil und Seiteninnenwand angeordnet.

In einer Ausgestaltung der Erfindung ist der Stützträger jeder Fahrzeugseite jeweils in einer Einbuchtung der Aufbausäulen der Seiteninnenwand angeordnet und über die Halteelemente festgelegt. Insbesondere kann der Stützträger aus einem rohrförmigen Teil bestehen und von bügelartigen Haltern teilweise umgriffen an den Aufbausäulen befestigt werden.

Wenn kein rohrförmiges Element verwendet wird, ist auch ein Vollmaterialkörper aus Leichtmetall, Stahl oder Kunststoff denkbar, wobei der Stützträger aus einem runden Rohrkörper oder aus einem polygonalem Rohrkörper bestehen kann, die beispiels- weise Metallschaum aufweisen können.

Damit bei einem Seitenaufprall das Stützelement nochmals gegen ein sofortiges Eindringen in das Schwellerinnenteil gehindert wird, ist der Stützbock vorgesehen. Dieser kann aus einem offenen oder geschlossenen Profil bestehen und eine mit der Ausbuchtung korrespondierende konkav ausgerundete Vertiefung aufweisen, die beabstandet zur ausgerundeten Einbuchtung vorgesehen ist. Gleichzeitig kann der Stützblock auch zur Energieaufnahme dienen.

Zur Vermeidung von aneinanderliegenden Flächen ist der Stützträger beabstandet zur Einbuchtung in der Seiteninnenwand und desweiteren ist der Stützbock im Abstand zur Rückseite der Einbuchtung angeordnet.

Zur Erzielung einer zusätzlichen Querversteifung des Fahrzeugaufbaus zu den längsverlaufenden Stützträgern ist ein Sitzquerträger der Plattform derart angeordnet, daß die mittlere B-Säule mit diesem verbunden ist, und gleichzeitig der Stützträger über den Halter diesem Sitzquerträger stirnseitig gegenübersteht. Hierdurch wird eine Versteifung der Aufbaustruktur und eine Kraftübertragung auf die gegenüberliegende Aufbauseite erzielt, und die Quersteifigkeit des Fahrzeugaufbaus gegen Seitenaufprall erhöht.

Ein Ausführungsbeispiel der Erfindung ist in den Zeichnungen dargestellt, und wird im folgenden näher beschrieben.
Es zeigen:
- Fig.1: eine schaubildliche Darstellung einer Seitenwandbaugruppe mit einem Stützträger, Seiteninnen- und Seitenaußenwandteil und Schwellerinnenteil des Fahrzeugaufbaus eines Kraftfahrzeugs,
- Fig. 2: eine Darstellung des Stützträgers mit Längsträger und Sitzquerträger in einer Unteransicht,

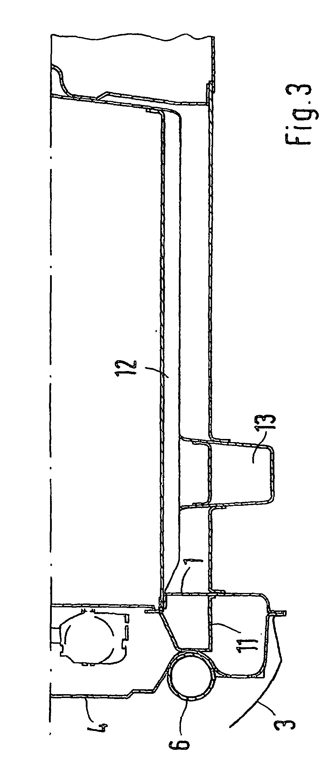

- Fig. 3: einen Querschnitt durch einen Sitzquerträger mit Stützträger,

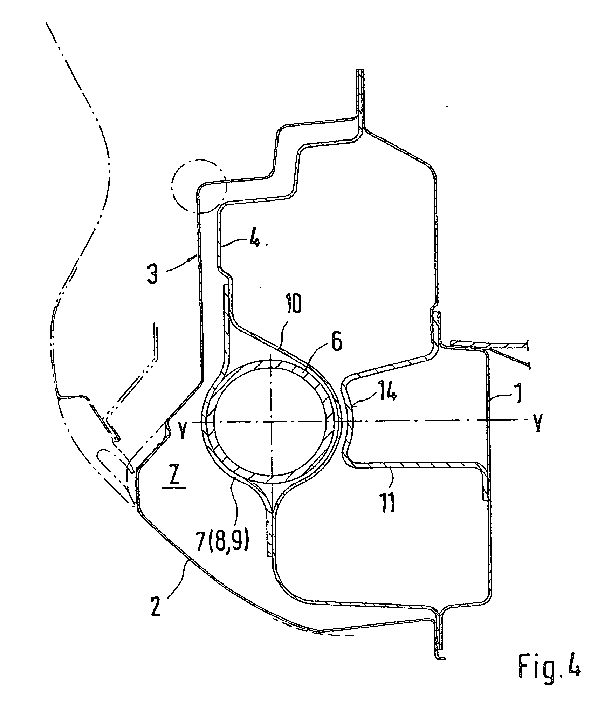

- Fig. 4: einen Querschnitt durch die Seitenwandbaugruppe mit integrierten Stützträgern und angedeuteter Tür,

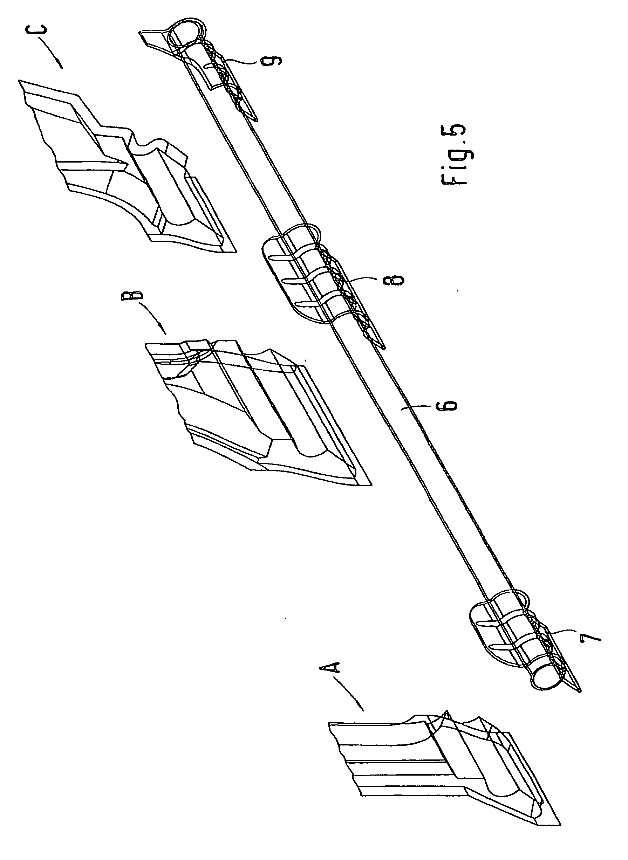

- Fig. 5: eine vergrößerte Darstellung des Stützträgers mit Haltern und Aufbausäulen, und
- Fig. 6: einen Querschnitt durch die Seitenwandbaugruppe mit integriertem Stützträger zwischen den Haltern.

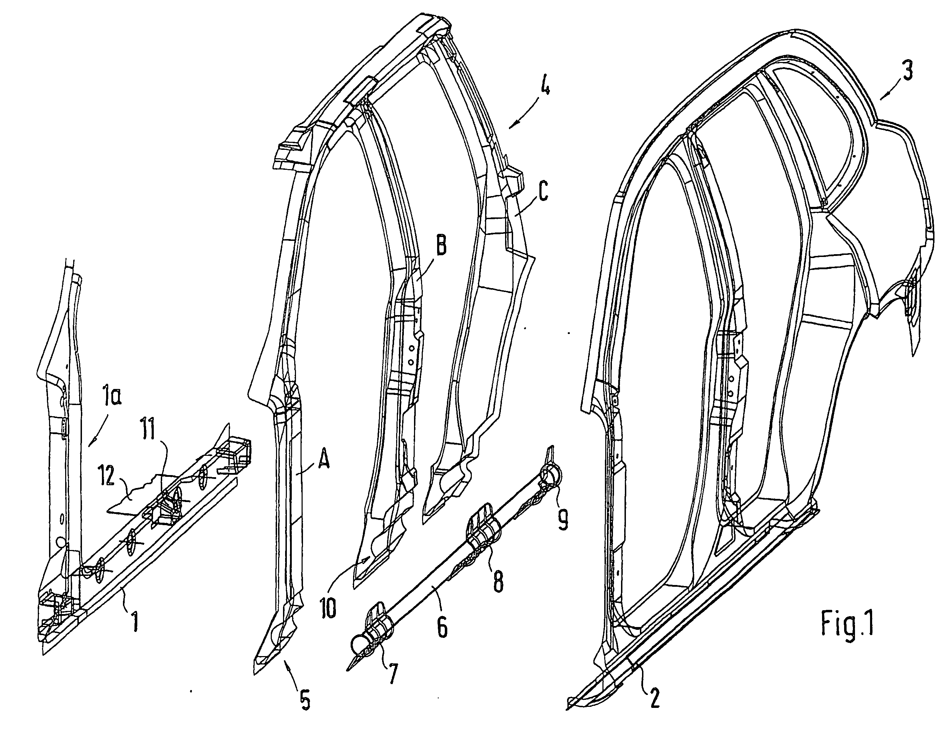

Wie in Fig. 1 näher dargestellt, ist im Fahrzeugaufbau zwischen einem Schwellerinnenteil 1 einer Aufbaustruktur 1a und einem Schwelleraußenteil 2 einer Seitenaußenwand 3, eine Seiteninnenwand 4 vorgesehen, die im Bereich des Schwellers 5 einen längsverlaufenden Stützträger 6 aufweist. Dieser ist mit den unteren Enden der Säulen A, B, C der Seiteninnenwand 4 über Halteelemente 7, 8, 9 verbunden.

Der Stützträger 6 besteht aus mindestens einem Rohr, das in einer Einbuchtung 10 der Säule A, B, C über die Halteelemente 7, 8, 9 befestigt ist. Diese bestehen aus sogenannten Bügelschellen, welche das Rohr umgreifen und mit den Säulenenden verbunden sind.

Der Stützträger 6 kann einen beliebigen Querschnitt aufweisen, wie beispielsweise einen Kreisquerschnitt, einen Ovalquerschnitt oder einen polygonalen Querschnitt. Er kann auch aus einem doppeltem Rohr oder aus einem Rohr mit mindestens einem innenseitigen längsverlaufenden Steg bestehen.

Am Schwellerinnnenteil 1 sind gegenüberstehend dem Stützträger 6 jeweils Stützböcke 11 angeordnet, die sich bei einem Seitenaufprall an den Stützträger 6 anlegen. Im Ruhezustand sind diese Stützböcke 11 beabstandet zur Einbuchtung 10 der Säulen A, B, C angeordnet. Entsprechend beabstandet ist auch der Stützträger 6 über die Halteelemente 7, 8, 9 in den Einbuchtungen 10 gehalten.

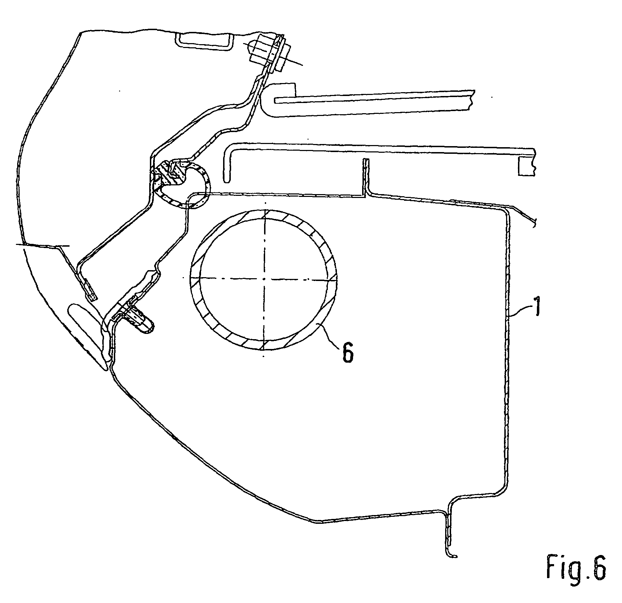

Zwischen den Haltern 7, 8, 9 ist der Stützträger 6 freiliegend angeordnet, wie insbesondere Figur 6 näher zeigt.

Die Einbuchtungen 10 an den unteren Enden der Säulen A, B, C sind etwa der Form des Rohres angepaßt. Entsprechend sind die Stützböcke 11 mit einer stirnseitigen Fläche ausgebildet, wobei diese eine halbrundförmige Stirnfläche aufweisen, so daß bei einem Seitenaufprall das Rohr 6 geführt in den Stützbock 11 eindringen beziehungsweise diesen energieverzehrend verformen kann.

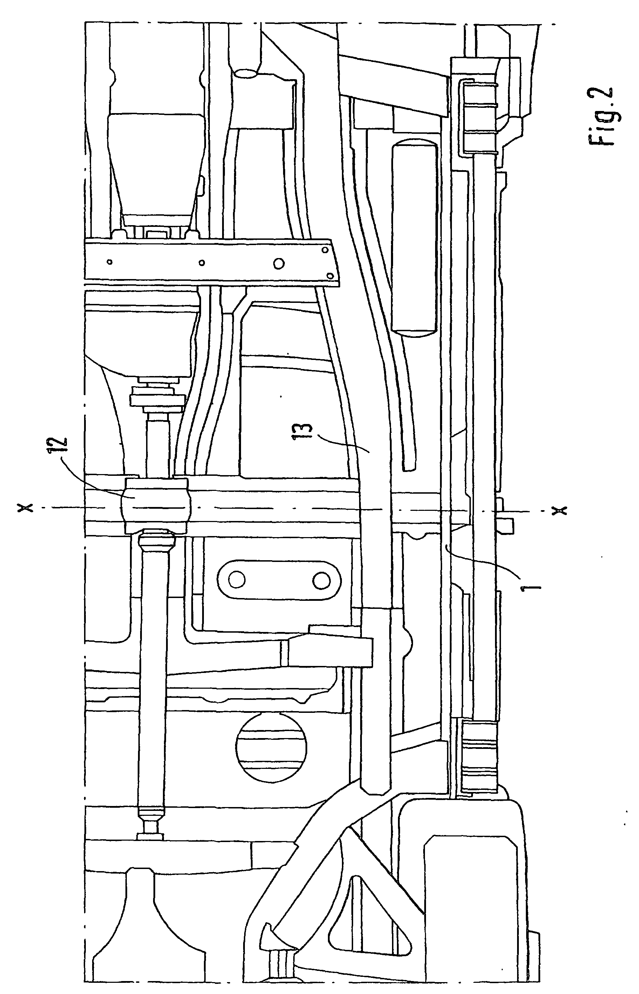

Die B-Säule ist mit ihrem unteren Ende in einer senkrechten Ebene x-x mit einem Sitzquerträger 12 angeordnet, was in Fig. 2 näher dargestellt ist. Der Sitzquerträger 12 ist endseitig mit dem Schwellerinnenteil 1 sowie mit dem Längsträger 13 verbunden. Ebenfalls ist der Stützbock 11 und das Halteelement 8 für den Stützträger 6 in dieser senkrechten Ebene x-x stirnseitig des Sitzquerträgers 12 angeordnet. Durch diese Anordnung wird in diesem Bereich eine besonders stabile Ausbildung des Fahrzeugaufbaus bei einem Seitenaufprall erzielt, damit die vorn sitzenden Personen insbesondere im Kopfbereich geschützt werden.

Der Stützträger 6 dient desweiteren dazu, bei einem Heck- oder Frontcrash ein Zusammendrücken des Fahrzeugs in Längsrichtung zu vermindern, indem über den Stützträger 6, der sich an das Rad anlegt, eine Abstützung erfolgt und der Verformung des zwischen den Rädern liegenden Bereichs des Fahrzeugs entgegengewirkt wird. Der Stützträger 6 kann an seinen freien Enden zusätzlich mit einem Deformationselement versehen sein.

Bei einem Seitenaufprall im Bereich des Sitzquerträgers 12 wird die Seitenaussenwand 3 gegen den Stützträger 6 derart gedrückt, daß dieser in die Einbuchtung 10 und gegen den Stützbock 11 gefahren wird, welcher sich am Sitzquerträger 12 abstützt. Auf der gegenüberliegenden Seite wird der Stützbock 11 gegen den Stützträger 6 gedrückt und hier abgestützt.

## Patentansprüche

1. Fahrzeug mit einer im Längsschwellerbereich des Fahrzeugaufbaus angeordneten seitlichen Verstärkung, die jeweils aus einem längsverlaufenden, teilweise freiliegend angeordneten Stützträger besteht, der sich über einen Bereich zwischen Radkästen des Fahrzeugs erstreckt und mittels Halteelementen (7, 8, 9) an Aufbausäulen (A, B, C) einer Seiteninnenwand (4) des Fahrzeugs befestigbar ist, **dadurch gekennzeichnet, dass** zwischen einem Schwellerinnenteil (1) und unteren Enden der Aufbausäulen (A, B, C) der Seiteninnenwand (4) jeweils ein Stützbock (11) angeordnet ist, der dem Stützträger (6) gegenübersteht und der Stützträger (6) jeweils in einer Einbuchtung (10) der Aufbausäulen (A, B, C) der Seiteninnenwand (4) angeordnet und über die Halteelemente (7, 8, 9) festgelegt ist und der Stützbock (11) aus einem offenen oder geschlossenen Profil besteht und eine mit der Einbuchtung (10) korrespondierende konkav ausgerundete Vertiefung (14) aufweist, die beabstandet zur ausgerundeten Einbuchtung (10) vorgesehen ist, wobei der Stützträger (6) über die Halter (7, 8, 9) im Abstand zur Einbuchtung (10) angeordnet ist.

2. Fahrzeug nach Anspruch 1, **dadurch gekennzeichnet, daß** die Aufbausäulen (A, B, C) der Seiteninnenwand (4) endseitig mit dem Schwellerinnenteil (1) sowie einem Schwelleraußenteil (2) einer Seitenaussenwand (3) verbunden sind und im verbleibenden Schweller-Raum zwischen dem Schwelleraussenteil (2) und der Seiteninnenwand (4) der Stützträger (6) angeordnet ist.

3. Fahrzeug nach den Ansprüchen 1 oder 2, **dadurch gekennzeichnet, daß** der Stützträger (6) aus einem rohrförmigen Element besteht, und die Halteelemente (7, 8, 9) aus bügelartigen Haltern (7, 8, 9) bestehen und der Stützträger (6) von diesen teilweise umgriffen an den Aufbausäulen (A, B, C) befestigt ist.

4. Fahrzeug nach einem oder mehreren der vorhergehenden Ansprüche, **dadurch gekennzeichnet, daß** der Stützträger (6) mit mindestens drei Aufbausäulen (A, B, C) an jeder Seite des Fahrzeugs über die Halter (7, 8, 9) verbunden ist.

5. Fahrzeug nach einem oder mehreren der vorhergehenden Ansprüche, **dadurch gekennzeichnet, daß** die mittlere Aufbausäule (B) endseitig etwa in Höhe eines Sitzquerträgers (12) angeordnet ist und die Verbindung des längsverlaufenden Stützträgers (6) über den Halter (8) in der senkrechten Ebene (x-x) des Sitzquerträgers (12) vorgesehen ist und diesem etwa stirnseitig gegenübersteht.

6. Fahrzeug nach einem oder mehreren der vorhergehenden Ansprüche, **dadurch gekennzeichnet, daß** der Stützträger (6) endseitig eine Abschlußkappe als Deformationselement aufweist.

7. Fahrzeug nach einem oder mehreren der vorhergehenden Ansprüche, **dadurch gekennzeichnet, daß** der Stützträger (6) aus Metall oder Kunststoff besteht.

## Claims

1. A vehicle with a lateral reinforcement arranged in the longitudinal sill region of the vehicle body, each reinforcement comprising a longitudinally extending supporting beam which is arranged so as to be partly exposed and extends over a region between wheel arches of the vehicle and is fixable by means of holding members (7, 8, 9) to body pillars (A, B, C) of an inner side panel (4) of the vehicle, **characterised in that** a supporting frame (11) is arranged between an inner sill part (1) and lower ends of the body pillars (A, B, C) of the inner side panel (4) and lies opposite the supporting beam (6), and the supporting beam (6) is arranged in a recess (10) in the body pillars (A, B, C) of the inner side panel (4) and is secured by the holding members (7, 8, 9), and the supporting frame (11) comprises an open or closed section and has a concavely rounded depression (14) corresponding to the recess (10) and is spaced apart from the rounded recess (10), wherein the supporting beam (6) is spaced apart from the recess (10) by means of the holders (7, 8, 9).

2. A vehicle according to claim 1, **characterised in that** the body pillars (A, B, C) of the inner side panel (4) are connected at their ends to the inner sill part (1) and to an outer sill part (2) of an outer side panel (3), and the supporting beam (6) is arranged in the sill space remaining between the outer sill part (2) and the inner side panel (4).

3. A vehicle according to claim 1 or 2, **characterised in that** the supporting beam (6) comprises a tubular member, and the holding members (7, 8, 9) comprise clamp-type holders (7, 8, 9), and the supporting beam (6) is partly surrounded by the holders (7, 8, 9) and fixed to the body pillars (A, B, C).

4. A vehicle according to one or more of the preceding claims, **characterised in that** the supporting beam (6) is connected by means of the holders (7, 8, 9) to at least three body pillars (A, B, C) on each side of the vehicle.

5. A vehicle according to one or more of the preceding claims, **characterised in that** the end of the centre body pillar (B) is arranged substantially at the level of a seat cross member (12), and the connection of the longitudinally extending supporting beam (6) is provided by means of the holder (8) in the vertical plane (x-x) of the seat cross member (12) and lies substantially opposite the end of the seat cross member (12).

6. A vehicle according to one or more of the preceding claims, **characterised in that** the end of the supporting beam (6) is provided with a closing cap acting as a deformation member.

7. A vehicle according to one or more of the preceding claims, **characterised in that** the supporting beam (6) is made of metal or plastics.

## Revendications

1. Véhicule avec un renfort latéral disposé dans la zone du seuil longitudinal de la carrosserie du véhicule, qui est constitué d'un porte-appui disposé en partie librement et s'étendant longitudinalement, lequel s'étend sur une zone comprise entre des carrossages de roue du véhicule et peut être fixé au moyen d'éléments de retenue (7, 8, 9) sur des montants de carrosserie ABC d'une paroi intérieure latérale (4) du véhicule, **caractérisé en ce qu'**un appui (11), est disposé entre une partie intérieure de seuil (1) et des extrémités inférieures des montants de carrosserie (A,B,C) de la paroi intérieure latérale (4), qui fait face au porte-appui (6) et le porte-appui (6) est disposé dans un creux (10) des montants de carrosserie (A,B,C) de la paroi intérieure latérale (4) et est fixé par les éléments de retenue (7, 8, 9), et l'appui (11) est constitué d'un profilé ouvert ou fermé et présente un renfoncement (14) arrondi concave correspondant au creux (10), lequel renfoncement est prévu à distance du creux (10) arrondi, le porte-appui (6) étant disposé, par l'intermédiaire des éléments de retenue (7, 8, 9), à distance du creux (10).

2. Véhicule selon la revendication 1, **caractérisé en ce que** les montants de carrosserie (A,B,C) de la paroi intérieure latérale (4) sont reliés côté extrémité à la partie intérieure de seuil (1) ainsi qu'à une partie extérieure de seuil (2) d'une paroi extérieure latérale (3), et dans l'espace de seuil restant, le porte-appui (6) est disposé entre la partie extérieure de seuil (2) et la paroi intérieure latérale (4).

3. Véhicule selon les revendications 1 ou 2, **caractérisé en ce que** le porte-appui (6) est constitué d'un élément de forme tubulaire, et les éléments de retenue (7, 8, 9) sont constitués de supports (7, 8, 9) de type étrier et le porte-appui (6) est partiellement entouré par ceux-ci et fixé sur les montants de carrosserie (A,B,C).

4. Véhicule selon une ou plusieurs des revendications précédentes, **caractérisé en ce que** le porte-appui (6) est relié à au moins trois montants de carrosserie (A,B,C) sur chaque côté du véhicule, par les éléments de retenue (7, 8, 9).

5. Véhicule selon une ou plusieurs des revendications précédentes, **caractérisé en ce que** le montant de carrosserie central (B) est disposé côté extrémité approximativement à hauteur d'une poutre transversale de siège (12) et la liaison du porte-appui (6) s'étendant longitudinalement, par l'intermédiaire de l'élément de retenue (8), est prévue dans le plan vertical (x-x) de la poutre transversale de siège (12) et fait face à celle-ci à peu près frontalement.

6. Véhicule selon une ou plusieurs des revendications précédentes, **caractérisé en ce que** le porte-appui (6) comporte côté extrémité un capuchon de fermeture servant d'élément de déformation.

7. Véhicule selon une ou plusieurs des revendications précédentes, **caractérisé en ce que** le porte-appui (6) est en métal ou en matière plastique.
